Europäisches Patentamt

**European Patent Office**

**Office européen des brevets**

(11) Veröffentlichungsnummer: **0 111 332**

**B1**

(12) **EUROPÄISCHE PATENTSCHRIFT**

(45) Veröffentlichungstag der Patentschrift: 14.10.87

(21) Anmeldenummer: **83112418.5**

(22) Anmeldetag: **09.12.83**

(51) Int. Cl.⁴: **H 04 L 11/16, H 04 B 9/00**

(54) **Verfahren zur Erkennung von Datenkollisionen in einem optischen Datenbus.**

(30) Priorität: **14.12.82 DE 3246301**

(43) Veröffentlichungstag der Anmeldung: **20.06.84 Patentblatt 84/25**

(45) Bekanntmachung des Hinweises auf die Patenterteilung: **14.10.87 Patentblatt 87/42**

(84) Benannte Vertragsstaaten: **DE FR GB IT**

(56) Entgegenhaltungen:
EP-A-0 098 452
DE-A-3 224 425

COMMUNICATIONS OF THE ACM, Band 19, Nr. 7, Juli 1976, Seiten 395-404, New York, USA; R.M. METCALFE et al.: "Ethernet: Distributed packet switching for local computer networks"
FIFTH TOPICAL MEETING ON OPTICAL FIBER COMMUNICATION, Phoenix, Arizona, 13.-15. April 1982, Seiten 22,23, IEEE, New York, USA; E.G. RAWSON et al.: "Fibernet II: an active star-configured fiber-optic local computer network with data collision sensing"
SIEMENS FORSCHUNGS- UND ENTWICKLUNGSBERICHTE, Band 9, Nr. 1, 1980, Seiten 32-37, Berlin, DE; A. SAUER et al.: "Einsatz eines Lichtwellenleiter-Bussystems in einer verteilten Multimikrocomputerstruktur"

(73) Patentinhaber: **Siemens Aktiengesellschaft Berlin und München, Wittelsbacherplatz 2, D-8000 München 2 (DE)**

(72) Erfinder: **Moustakas, Steven, Dr., Schellingstrasse 19, D-8000 München 40 (DE)**
Erfinder: **Witte, Hans- Hermann, Dr., Hippelstrasse 15, D-8000 München 82 (DE)**

(56) Entgegenhaltungen: (Fortsetzung)
ELECTRONICS LETTERS, Band 19, Nr. 15, Juli 1983, Seiten 592,593, London, GB; S. MOUSTAKAS et al.: "Novel collision detection technique for CSMA/CD based fibre-optical local area networks"
SIEMENS FORSCHUNGS- UND ENTWICKLUNGSBERICHTE, Band 12, Nr. 1, 1983, Seiten 11-15, Springer-Verlag, Berlin, DE; P.A. STOCK: "Communication network with an optical-bus system"

## Beschreibung

Die vorliegende Erfindung betrifft ein Verfahren zur Erkennung von Datenkollisionen in einem optischen Datenbus nach dem Oberbegriff des Patentanspruchs 1.

Schalteinrichtungen, die ein Verfahren der genannten Art realisieren, sind beispielsweise in der älteren europäischen Patentanmeldung EP-A-98 452, veröffentlich am 18.1.1984, vorgeschlagen. Diese Verfahren beruhen auf einer Pegelbewertung der in einem Empfänger einlaufenden Impulse oder auf einem bitweisen Vergleich der abgesandten und empfangenen Impulse.

In Fifth Topical Meeting on Optical Fiber Communications, Phoenix, Arizona, 13.-15. April 1982, S. 22, 23, IEEE, New York, USA, ist ein Stern-Repeater beschrieben, bei dem eine auf einer Pegelüberwachung fußende Erkennung von Datenkollisionen durchgeführt wird.

Aus Siemens Forschungs- und Entwicklungsberichte, Bd. 9, Nr. 1, 1980, S. 32-37, Berlin, ist eine verteilte Multimikrocomputerstruktur mit einem Lichtwellenleiter-Bussystem bekannt, bei der zur Erkennung von Datenkollisionen auf den Bus ein Byte-weiser Informationsvergleich des Sendesignals mit dem Empfangssignal eines Teilnehmers durchgeführt wird.

Aus Communications of the ACM, Bd. 19, Nr. 7, Juli 1976, S. 395-404, New York, ist ein asynchron arbeitender optischer Datenbus, an den mehrere Stationen mit Sendern und Empfängern angeschlossen sind, bekannt, bei dem eine Station nach einer Kollisionserkennung ein JAM-Signal aussendet.

Aufgabe der Erfindung ist es, ein Verfahren der eingangs genannten Art anzugeben, das sich im Vergleich zu den obengenannten vorgeschlagenen oder bekannten Verfahren durch einen erheblich vereinfachten schaltungstechnischen Aufwand auszeichnet.

Diese Aufgabe wird durch die im kennzeichnenden Teil des Patentanspruchs 1 angegebenen Merkmale gelöst.

Bus-Umlaufzeit eines Teilnehmers bedeutet die Zeit, in der das erste Bit, das der Teilnehmer ausgesandt hat, wieder bei ihm eingelaufen ist.

Aus praktischen und logischen Gründen fällt die Zeit, während der sendende Teilnehmer abfragt, ob in seinem Empfänger Datensignale aus dem Bus einlaufen, immer kleiner aus als die Bus-Umlaufzeit dieses Teilnehmers. Dies bedeutet, daß man eine Dauer hat, in der nicht abgefragt wird und daher auch keine Kollisionen erkannt werden können. Für gewisse Anwendungsfälle kann die Wahrscheinlichkeit für die Nichterkennung der Kollision während der Totzeit zu hoch werden.

Um auch während der Totzeit Kollisionen erkennen zu können, wird vorteilhafterweise gemäß Anspruch 2 vorgegangen.

Als anderes Kollisions-Erkennungsverfahren eignet sich das Verfahren nach Anspruch 3 oder auch das Verfahren nach Anspruch 4.

Bei Verfahren nach Anspruch 4 können die Kollisionen direkt von allen Teilnehmern erkannt werden. Dieses besonders einfache Verfahren ist allerdings nur realisierbar, wenn die maximale Leistungsdifferenz an jedem beliebigen Empfänger 3 dB nicht überschreitet.

Besonders geeignet als anderes Kollisions-Erkennungsverfahren ist die Kombination aus dem Verfahren nach Anspruch 3 und Anspruch 4. Dieses Verfahren stellt praktisch keine Anforderungen an die Pegeldynamik oder an Schwankungen der Leistungspegel am Ort der Empfänger. Kollisionen brauchen nur durch augenblicklich sendende Teilnehmer festgestellt werden, die dann ihrerseits diesen Zustand durch die JAM-Signale, d.h. Signale, die unter den Datensignalen nicht vorkommen, allen nicht sendenden Teilnehmern mitteilen.

Die Verfahren nach Anspruch 3 oder Anspruch 4, insbesondere 3 und 4, bilden die Grundlage für Ausführungen von asynchron arbeitenden optischen Datenbussen, in denen Freileitung, Kollision und Unterbrechungs-Anforderung (Interrupt) in allen Teilnehmern, die vorzugsweise aus Rechnern bestehen, erkannt werden können. Bei den Verfahren nach Anspruch 3 und 4 werden in den sendenden Empfängern im Falle von Kollisionen immer nur die Pegel aus eigenen Daten mit Pegeln der Summe aus eigenen Daten mit Stördaten verglichen.

Das erfindungsgemäße Verfahren nach Anspruch 1 bildet die Grundlage für eine einfache Steuerschaltung zur Erkennung von Kollisionen und Freileitung in passiven otpischen Bussen, insbesondere Stern-Bussen, mit asynchronem Zugriffsverfahren, die erstens keine speziellen Anforderungen an den passiven Sternkoppler hinsichtlich der Leistungs-Gleichverteilung am Koppler-Ausgang stellt und zweitens beliebig unterschiedliche Entfernungen zwischen den Teilnehmern zuläßt. Bislang wurde dies im Sternbus durch die Pegelbewertung der im Empfänger einlaufenden Impulse oder durch den bitweisen Vergleich der ausgesandten und empfangenen Impulse erreicht.

Es sei darauf hingewiesen, daß eine Pegelbewertung hohe Anforderungen an die Gleichverteilung der Leistung am Stern-Koppler-Ausgang bzw. am Empfänger-Eingang stellt, während 30 ein bitweiser Vergleich hohe Anforderungen an die Synchronisation der zu vergleichenden Bits stellt.

Demgegenüber führt das erfindungsgemäße Verfahren nach Anspruch 1 zu einem erheblich vereinfachten schaltungstechnischen Aufwand und die kritischen Engpässe beim Koppler und bei der Synchronisation entfallen. Je nach Zeitpunkt des Datenabsetzens oder der verschiedenen Entfernungen der Teilnehmer zum Koppler usw. stellt immer einer der am Datensenden beteiligten Teilnehmer eine Kollision fest. Das erfindungsgemäße Verfahren nach Anspruch 1 ist auch auf T-Busse anwendbar.

Bevorzugte und vorteilhafte Ausgestaltungen der im Anspruch 1 angegebenen Verfahren und bevorzugte spezielle Schaltungen zur Durchführung solcher Verfahren oder spezieller Verfahrensschritte gehen aus den Unteransprüchen hervor.

Die Erfindung wird prinzipiell und auch beispielhaft anhand der Figuren in der folgenden Beschreibung näher erläutert. Von den Figuren zeigen:

Figur 1 ein Blockschaltbild einer Schaltung zur Kollisions- und Freileitungserkennung, die durch die gestrichelt umrahmten Blockeinheiten A, B und C erweitert ist, von denen die Einheit A zur Erzeugung eines JAM-Signals in Abhängigkeit von einem Kollisionssignal dient, die Einheit B eine sogenannte JAM-Signal-Erkennungsschaltung und C die Kollisions-Erkennungsschaltung darstellt;

Figur 2 ein Schaltbild einer in der Schaltung nach Figur 1 verwendbaren Sendersteuerung, die mit im Handel erhältlichen logischen Bausteinen aufgebaut ist,

Figur 3 eine Schaltung zur Erkennung der Freileitung und von Kollisionen, die auf der Verfahrensversion c) basiert und mit im Handel erhältlichen logischen Bausteinen aufgebaut ist,

Figur 4 mit im Handel erhältlichen logischen Bausteinen aufgebaute Empfänger-Steuerschaltung, die im folgenden nur soweit beschrieben wird, wie es für das Zusammenwirken mit der Schaltung nach Figur 3 erforderlich ist.

Figur 5 schematisch das Bitmuster eines Datenpakets und ein Gültigkeitssignal.

In den verschiedenen Figuren sind Elemente, die einander entsprechen, mit gleichen Bezugszeichen versehen.

Für die nachfolgende Beschreibung gilt folgendes: Die Zeitkonstante $\tau_i$ (i = 1 bis 7) des (retriggerbaren) monostabilen Multivibrators i, kurz bezeichnet mit (R.) M.M.i, entspricht der Zeit des instabilen Zustandes des Multivibrators.

Die mit Zahlen angegebenen Zeitkonstanten beziehen sich auf eine Buslänge von 600 m. Bei einem Brechungsindex des Glasfaserkerns von 1,5 beträgt auf einer Glasfaserstrecke von 600 m die Laufzeit eines Impulses 3 µs.

Eine Unterbrechungs-Anforderung wird durch einen kurzen positiven Impuls dargestellt.

Die Zeit zwischen Nutzdaten-Anfang und Nutzdaten-Ende fällt in die Dauer eines durch eine logische "1" dargestellten Gültigkeitssignals.

Die Datenrate des Systems betrage 16 Mbit/s. Der zum Verwürfeln der Datensignale notwendige Scrambler sei so ausgelegt, daß an seinem Ausgang nicht mehr als acht "1" bzw. "0" in ununterbrochener Folge erscheinen.

Der Zustand "keine Daten senden" wird durch eine ununterbrochene Folge von Bits des Binärzustandes "0" die länger als acht Bits ist, dargestellt.

JAM-Signale werden durch Unterbrechungs-Anforderungen oder Kollisionen ausgelöst, und umfassen etwa 30 Bits des Binärzustandes "1" in ununterbrochener Folge.

In den vorgeschlagenen Schaltungen, wie sie in der genannten älteren Patentanmeldung ausführlich dargestellt sind, ist davon ausgegangen, daß

1. Datenanfang und -ende der vom Rechner gelieferten Daten jeweils durch Impulse auf einer eigenen Leitung angezeigt wurden;

2. Kollisionen nur in den sendenden Rechnern erkannt werden mußten, und

3. Unterbrechungs-Anforderungen nicht erkannt werden mußten.

Die Bits des Senders eines Teilnehmers wurden mit den Bits verglichen, die in den Empfänger des gleichen Teilnehmers einlaufen. Es war eine Verzögerungsschaltung vorgesehen, derart, daß jedes Bit des Senders mit demjenigen Bit zeitlich zusammenfällt, das vom gleichen Sender kommt und nach Durchlaufen der Busstrecke zum Empfänger des sendenden Teilnehmers zurückgekehrt ist. In einer anderen Schaltungsversion wurde im wesentlichen das zeitlich genau abzustimmende Verzögerungsglied durch einen Analog-Komparator ersetzt, der es zusammen mit dem im eigentlichen Empfängerkreis stets vorhandenen Analog-Komparator ermöglichte, durch Auswertung der Amplituden der Bitströme Kollisionen festzustellen.

Die Anforderungen an die Kollisions- und Freileitungsschaltung werden beim hier beschriebenen Vorschlag im wesentlichen in drei Punkten verschärft. Bei diesem Vorschlag sind die folgenden drei abgeänderten Forderungen berücksichtigt.

1. Daten-Anfang und -Ende sollen nicht mehr durch zwei getrennte Leitungen bzw. "Trigger-Impulse" angezeigt werden, sondern durch einen Impuls, in dessen Dauer das Datensenden, d.h. das Senden der eigentlichen Daten oder Nutzdaten fällt. Dieser Impuls ist, wie bereits erwähnt, als Gültigkeitssignal bezeichnet.

2. Kollisionen sollen in allen Rechnern erkannt werden, und nicht wie bisher, nur in sendenden Rechnern.

3. Das system soll auch Unterbrechungs-Anforderungen erkennen.

Was die zweite Forderung anbelangt, so sind zwei Realisierungen zu unterscheiden.

I. Wenn die maximalen Leistungsschwankungen bei irgendeinem Empfänger etwa 3 dB, vorzugsweise 2 dB, nicht überschreiten, können mit der in der genannten älteren Patentanmeldung vorgeschlagenen Pegelbewertung über die beiden dortigen Komparatoren K1 und K2 Kollisionen nicht nur in den sendenden, sondern allen Rechnern direkt erkannt werden. Die Schwellwerte in den Schwellwertkomparatoren werden so gewählt, daß beim Vorhandensein nur eines Bitstromes nur der Komparator K1 und nicht auch der Komparator K2 ansprechen, wodurch angezeigt wird, daß keine Kollision vorhanden ist. Überlagern sich jedoch mindestens zwei Bitströme, so soll auch der Komparator K2 ansprechen, wodurch eine Kollision angezeigt wird. Eine eindeutige Unterscheidung zwischen Kollision und Nicht-Kollision ist bei diesem Prinzip nur möglich, wenn die Leistungsschwankungen am Empfänger nicht so groß sind, daß die Summe der Amplituden (am Ausgang des Verstärkers) zweier Bitströme kleiner oder gleich der Amplitude eines Bitstroms werden kann. Ein JAM-Signal ist bei diesem Verfahren nicht nötig.

II. Wenn die Busstrecke mit dem Stern-Koppler diese Bedingung an die Leistungspegel nicht erfüllt, können Kollisionen nur in den sendenden Rechnern erkannt werden. Über JAM-Signale muß die Feststellung einer Kollision allen Rechnern mitgeteilt werden. JAM-Signale müssen ein Bitmuster sein, das sich eindeutig von Nutzdaten und dem Zustand "nicht Daten senden" unterscheidet. Für die Erzeugung und Erkennung von JAM-Signalen ist schaltungstechnischer Aufwand erforderlich.

In dem folgenden ausführlich beschriebenen Fall gemäß Figur 7 wird davon ausgegangen, daß JAM-Signale benötigt werden. Diese müssen erzeugt und erkannt werden können. In den folgenden Ausführungen ist vorausgesetzt, daß teilweise die Funktionen nur durch logische Blockeinheiten dargestellt sind. So werden beispielsweise benötigte Leistungstreiber, deren logische Funktion einem Inverter entspricht, teilweise durch Inverter dargestellt.

In der Figur 7 ist das Zusammenspiel der logischen Blockeinheiten dargestellt.

Freileitungs-Erkennung:

Die Schaltung zur Erkennung der Freileitung, d.h. des Zustandes, bei dem der Bus frei ist von Datensignalen, ist die gleiche wie in der genannten älteren Patentanmeldung. Die Zeitkonstante $\tau_1$ des das Freileitungssignal erzeugenden retriggerbaren monostabilen Multivibrators R.M.M.1 wird im hier beschriebenen Fall noch etwa 5 µs lang gewählt. Dadurch wird ausgeschlossen, daß lange ununterbrochene Folgen von Bits des Binärzustandes '1', wie sie z. B. in einem JAM-Signal vorliegen, ein Freileitungs-Signal '1' erzeugen. Ist nämlich $\tau_1$ nicht groß genug, so wird der Ausgang $\bar{Q}$ des Multivibrators R.M.M.1 bei '1'-Folgen, die länger als $\tau_1$ sind, '1', weil in der '1'-Folge kein positiver Flankenwechsel bzw. keine positive Flanke stattfinden bzw. auftreten kann.

Erkennung von Kollisionen in sendenden Rechnern und Erzeugung eines JAM-Signals:

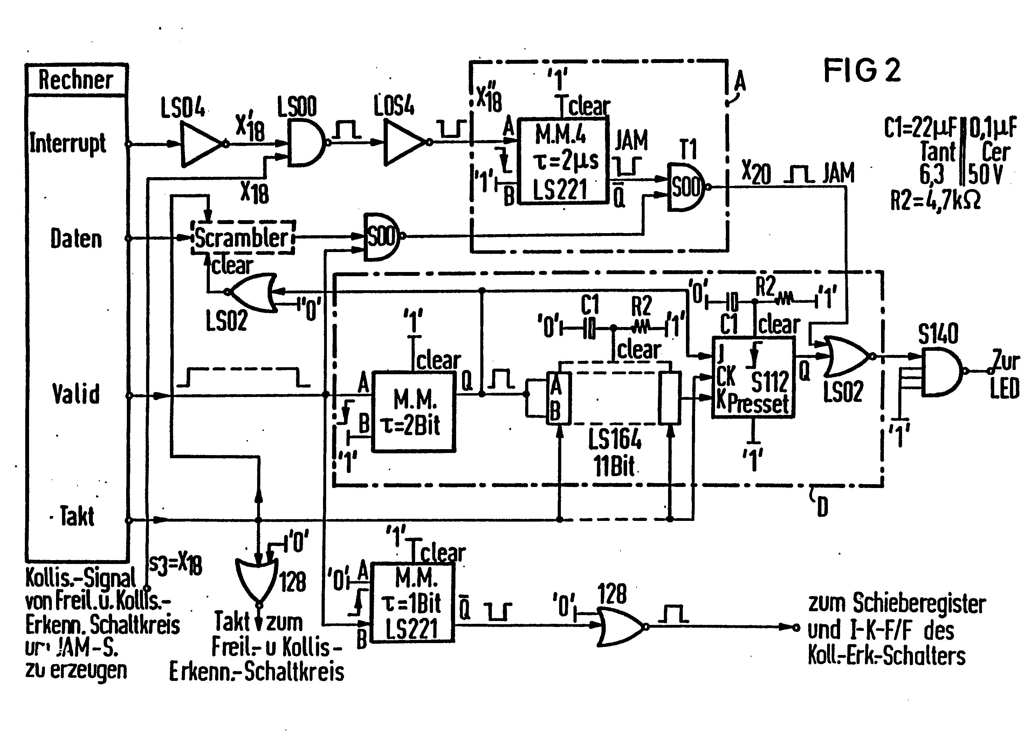

Wie in der genannten älteren Patentanmeldung ausführlich erläutert, wird in einem sendenden Rechner bei einer Kollision $x_7 = '1'$. Dadurch wird $x''_{18} = x_{18} = '1'$ ($x_{18}$ entspricht dem Ausgang $x_{15}$ in Figur 2 der älteren Patentanmeldung). Durch den monostabilen Multivibrator M.M.4 wird $x_{19} = '0'$. Wenn $x_7 = '1'$ wird, ist $x'_{22} = '1'$. Dieses Kollisionssignal $x'_{22}$ schaltet $x_{17}$ auf '0' ab, so daß $x'_{11} = '1'$ wird, und '1' bleibt (Maßnahme, die im Rechner vorgenommen wird). Solange $x_{19} = '0'$ ist ($\tau_4$), sendet die LED '1' aus. Dieses JAM-Signal wird etwa 30 Bits lang gewählt. Danach sind $x_{19} = x'_{11} = '1'$ und die LED sendet nur noch '0'. Die Zeitkonstante $\tau_6$ wird etwas (100ns...200ns) größer als die Zeitkonstante $\tau_3$ gewählt. Wenn nämlich das durch eine Kollisions-Erkennung erzeugte JAM-Signal nach Durchlaufen der Busstrecke wieder an den Entstehungsort zurückkommt, soll verhindert werden, daß erneut ein JAM-Signal erzeugt wird. Das zurückkommende JAM-Signal erzeugt jedoch möglicherweise eine Kollision ($x_7 = '1'$). Solange $x_7 = '1'$ ist, muß $x_{18}$ durch eine entsprechende Zeitkonstante $\tau_6$ auf '1' bleiben, damit $x_{19}$ nicht wieder nach '0' geht und ein neuerliches JAM-Signal auslöst.

Interrupt-Behandlung:

Beim Auftreten eines Interrupt- bzw. eines Unterbrechungs-Impulses (ein Rechner möchte den derzeitigen Zustand unterbrechen und möglicherweise selber senden) wird $x''_{18} = '1'$ und es wird $x_{20} = '1'$ für die Zeit, die der Zeitkonstanten $\tau_4$ entspricht, d.h. die LED erzeugt ein JAM-Bignal. Gleichzeitig mit dem Interrupt-Impuls wird $x = '0'$ geschaltet (und bleibt '0'). Nach dem JAM-Signal ist die LED (Licht emittierende Diode) abgeschaltet.

Erkennung des JAM-Signals:

Die Schaltung zur Erkennung der JAM-Signale entspricht, grob gesagt, einem Zähler, der erkennt, daß z. B. mehr als 30 Bits des Binärzustandes '1' in ununterbrochener Reihenfolge aus dem Komparator K1 des Empfängers ausgetreten sind. Dieser Zustand ist eindeutig dem JAM-Signal zugeordnet.

Die Zeitkonstante des retriggerbaren monostabilen Multivibrators R.M.M.5 der JAM-Signal-Erkennungsschaltung wird mehr als zweimal die Zeit gewählt, die für den längsten ununterbrochenen Strom von '1' aus dem Scrambler benötigt wird. Es sei beispielsweise angenommen, daß den Scrambler nicht mehr als acht '1' bzw. '0' in ununterbrochener Reihenfolge verlassen können. Die Zeitkonstante $\tau_5$ des Multivibrators R.M.M.5 wird dann beispielsweise 20 Bits lang gewählt. Dann tritt bei "Senden von Daten" innerhalb dieser Zeit immer ein positiver Flankenwechsel auf, so daß bei Datenempfang $\bar{Q}$ = '0' bleibt. Wenn nun ein JAM-Signal kommt, beispielsweise 30 Bits lang eine '1', bleibt $\bar{Q}$ noch für eine Zeit von höchstens 20 Bits lang '0' und geht dann in den '1'-Zustand über. Wenn eine '1' eines Datenstromes in den Multivibrator R.M.M.5 gelangt, erscheint die durch die positive Flanke dieser '1' bei $\bar{Q}$ ausgelöste '0' um etwa 15 ns verzögert. Dann würde für die Zeit von 15 ns $x_{21}$ = $x'_2$ = '1'. Es würden diese Daten fälschlicherwüise als JAM-Bignal erkannt. Verzögert man jedoch $x_2$ um mindestens 15 ns, so wird der einlaufende Datenstrom nicht als Kollision gedeutet. Tritt nun wirklich ein JAM-Signal von z. B. 30 aufeinander folgenden '1' auf, so bleibt $\bar{Q}$ noch für eine Zeit von höchstens 20 Bits '0' und wird dann '1'. Zusammen mit $x'_2 = '1'$ wird $x'_{22} = '1'$, also wird das JAM-Signal in Form des Kollision-Signals '1' erkannt.

Kollisions-Erkennung in nicht sendenden Rechnern:

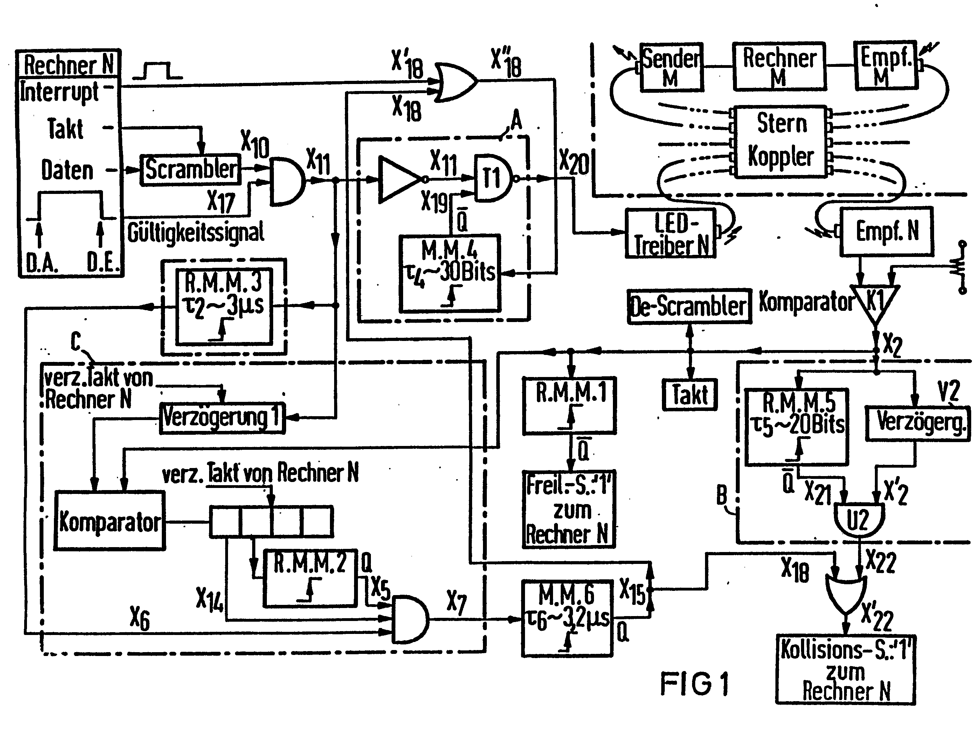

Nicht sendende Rechner können in der in Figur 1 dargestellten Behaltung Kollisionen nur durch JAM-Signale erkennen, die von sendenden Rechnern stammen, in denen Kollisionen erkannt worden sind.

Es sei noch einmal hervorgehoben, daß in dem ausführlich dargelegten Beispiel nach Figur 7 JAM-Signale erzeugt und erkannt werden müssen, weil Kollisionen nur in sendenden Rechnern festgestellt werden. Weiterhin ist in der Schaltung nach Figur 1 angenommen, daß die Erkennung der Kollisionen in sendenden Rechnern über die Verzögerung der eigenen Daten durch bitweisen Vergleich erfolgt. Die Feststellung der Kollision in sendenden Rechnern kann auch durch zwei Komparatoren erfolgen, so wie es in der genannten älteren Patentanmeldung dargestellt ist. Schließlich können im einfachsten Fall Kollisionen in allen Rechnern direkt, d.h. ohne JAM-Signale erkannt werden, wenn die maximale Leistungsschwankung an irgendeinem Empfänger als Funktion aller Sender etwa 2 dB nicht überschreitet. Das wird wieder mit Hilfe zweier Komparatoren durchgeführt. In diesem Fall würden die Leitung $x_6$ und der retriggerbare monostabile Multivibrator R.M.M.3 in Figur 1 überflüssig.

In den Figuren 2 bis 4 sind drei Steuer-Schaltungs-Einheiten angegeben, mit denen die Schaltung gemäß Figur 1 aufgebaut werden kann.

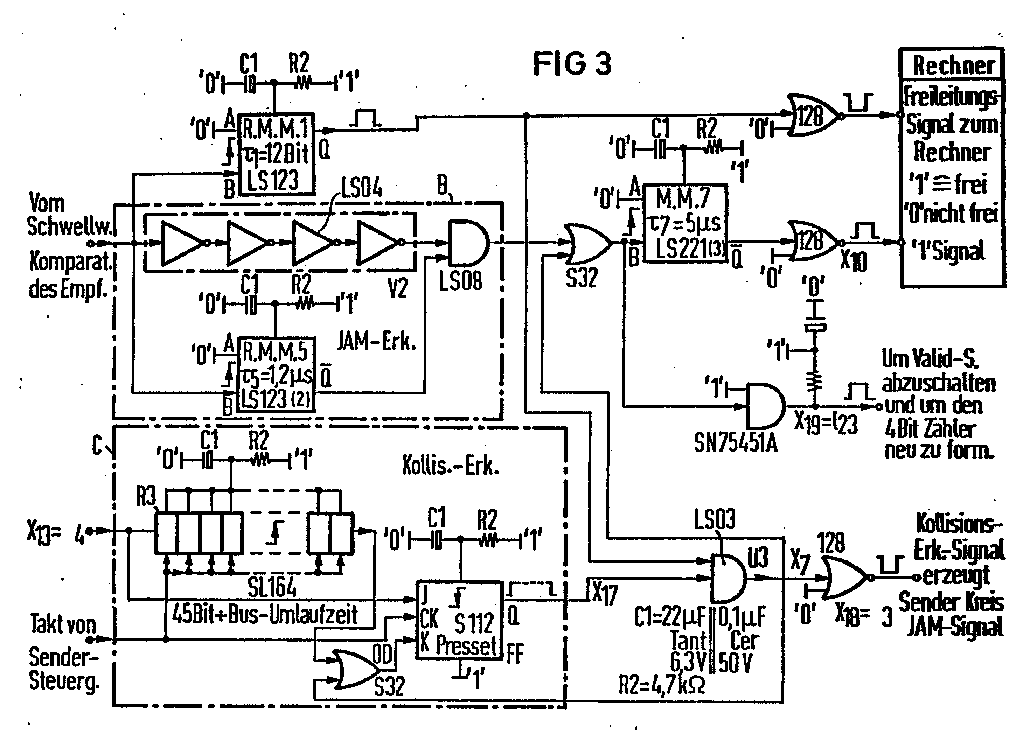

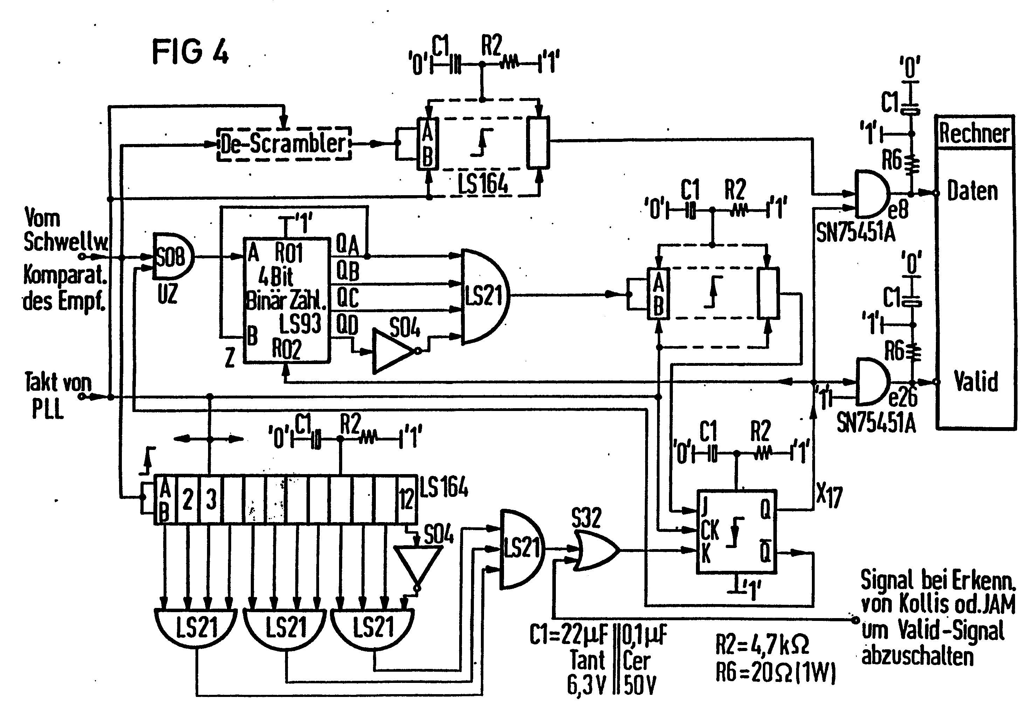

Die drei Einheiten bestehen aus der in Figur 2 dargestellten Sender-Steuerung, der in Figur 3 dargestellten Freileitungs- und Kollisionserkennung und aus der in Figur 4 dargestellten Empfänger-Steuerung.

Die Sender-Steuerung enthält die genannte Einheit A in Figur 1 und die Freileitungs- und Kollisions-Erkennung genannte Einheit B in Figur 1. Die Sender-Steuerung sendet Daten in Form von Datenpaketen aus, von den jedes neben den Nutzdaten sog. Kopf-Bits und gegebenenfalls auch Dummy-Bits sowie Ende-Markierungsbits enthält. Die Kopf-Bits und gegebenenfalls auch die Dummy-Bits sind den Nutzdaten vorangestellt, während die Ende-Markierungsbits das Ende der Nutzdaten markieren. Die Kopf-Bits, Dummy-Bits und Nutzdaten, die durch die Vorderflanke und Rückflanke des Gültigkeitssignals zeitlich begrenzt sind, werden von der Sender-Steuerung in verwürfelter Form ausgesandt.

Die Empfänger-Steuerung gewinnt aus dem von der Sender-Steuerung ausgesandten verwürfelten Datenpaket die Nutzdaten zurück. Das gleiche gilt für den Takt und das Gültigkeitssignal. Bei Kollision schaltet sie das Gültigkeitssignal ab.

Die Freileitungs- und Kollisions-Erkennung enthält auch eine Kollisions-Erkennungsschaltung, die auf der Verfahrensvariante c) im Anspruch 1 basiert. Bei Verwendung dieser Freileitungs- und Kollisions-Erkennungsschaltung zum Aufbau der Schaltung nach Figur 1 bedeutet dies demnach auch, daß das Kollisions-Erkennungsprinzip geändert ist, weil die Kollisions-Erkennungsschaltung C in Figur 1 durch die anders arbeitende Kollisions-Erkennungsschaltung C' gemäß Figur 3 ersetzt ist.

Im folgenden wird nur noch die Kollisions-Erkennungsschaltung C' und die daraus resultierenden schaltungstechnischen Vereinfachungen in der "Freileitungs- und Kollisions-Erkennungsschaltung" nach Figur 3 beschrieben.

Bei der Angabe konkreter Zahlen ist wieder angenommen, daß die Datengeschwindigkeit auf dem Bus 16 Mbit/s und die Entfernung zwischen den Teilnehmern etwa 600 m beträgt, der Scrambler keine ununterbrochene Folge von mehr als acht '0' bzw. '1' im verwürfelten Datenpaket zuläßt, Kopfbits immer mit '1' beginnend am Anfang eines Datenpaketes 14 Bits lang sind und das Ende eines Datenpaketes beim Übertragen über den Bus aus einer '0' und elf Bits des Zustandes '1' besteht. Das Datenende-Muster wird durch die Sender-Steuerung gemäß Figur 2 erzeugt, und zwar durch die Einheit D. Außer den eigentlichen Daten werden vom Rechner das Gültigkeitssignal (Valid-Signal) und der Takt geliefert, die neben den eigentlichen Daten in der Empfänger-Steuerung zurückgewonnen werden müssen.

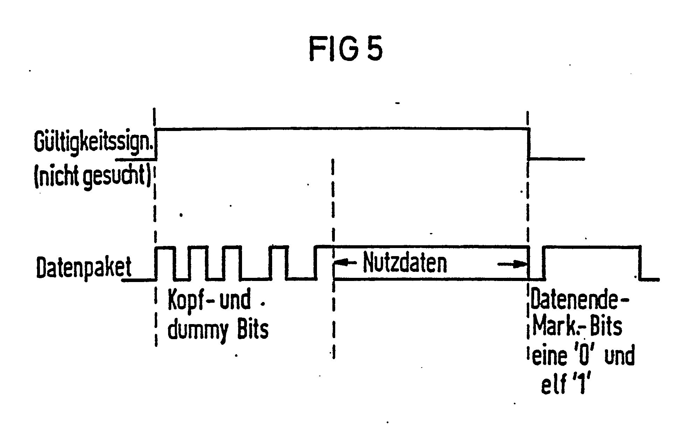

Das gesamte durch die LED abgesandte Datenpaket bestehend aus Kopf- und Dummy-Bits, den eigentlichen Daten und den Ende-Markierungsbits hat jeweils das aus Figur 5 ersichtliche Muster. Dort ist auch das Gültigkeitssignal über dem Muster des Datenpaketes eingezeichnet. Das Gültigkeitssignal wird nicht gesendet.

Die Zeitkonstante $\tau_1$ des retriggerbaren monostabilen Multivibrators R.M.M.1 in Figur 3 ist so gewählt, daß der Freileitungszustand ein Bit später, nachdem das gesamte Datenpaket von allen Teilnehmern empfangen worden ist, angezeigt wird. Ein JAM-Signal besteht aus einem ununterbrochenen Strom von '1', nicht weniger als 24 Bit lang, was einer Dauer von 1,5 µs entspricht. Die vier Inverter bilden die Verzögerung V2 und berücksichtigen dementsprechend die Laufzeit durch den retriggerbaren monostabilen Multivibrator R.M.M.2, so daß zusammen mit der Zeitkonstanten $\tau_2 = 1,2$ µs gewährleistet ist, daß $x_6 = '1'$ werden kann, nur während des JAM-Signals. Aus dem JAM-Erkennungs-Signal oder dem Kollisions-Erkennungs-Signal wird durch den monostabilen Multivibrator M.M.7 ein für den Rechner geeignetes Signal $x_{10}$ gebildet; weiterhin wird durch das JAM-Erkennungs-Signal oder das Kollisions-Erkennungs-Signal ein Signal $x_{19}$ erzeugt, das im Empfänger-Steuerschaltkreis nach Figur 4 das Gültigkeitssignal $e_{26}$ und den wiedergewonnenen Datenstrom zum Rechner $e_{28}$ abbricht, das UND-Gatter $U_z$ vor dem Zähler Z wieder öffnet und den inzwischen auf '0' zurückgesetzten Zähler Z zählbereit schaltet.

Kollisions-Erkennung:

Wenn ein Teilnehmer zu senden beginnt, wird ein 1-Bit langer Impuls in der Sende-Steuerung durch die positive Flanke des Gültigkeits-Signals erzeugt. Dadurch wird $x_{17}$ im JK-Flipflop FF in Figur 3 '1' und das UND-Gatter $U_3$ wird geöffnet. Während das UND-Gatter $U_3$ geöffnet ist, kann der sendende Teilnehmer über den retriggerbaren monostabilen Multivibrator R.M.M.1 den Bus daraufhin abfragen, ob Impulse einlaufen oder nicht. Diese Abhör-Zeit wird kleiner, möglichst aber gleich der Umlaufzeit gewählt, die diesem Teilnehmer entspricht. Wenn während dieser Zeit ein Signal empfangen wird, muß es von einem anderen Teilnehmer stammen, d.h. es hat eine Kollision stattgefunden. An $x_7$ wird ein positiver Impuls erzeugt. Zusätzlich zu dem, was schon ein JAM-Erkennungs-Impuls $x_6$ bewirkt hat, bewirkt $x_7 =$ '1' auch noch, daß in der Sender-Steuerung über $x_{18}$ ein JAM-Signal erzeugt wird. Durch geeignete Wahl der Zeitkonstante $\tau_7$ im monostabilen Multivibrator M.M.7 verhindert man, daß das JAM-Signal, das der die Kollision erkennende Teilnehmer erzeugt hat, nach einem Busumlauf erneut den Multivibrator M.M.7 triggert.

$X_{17}$ wird '1' bei Start des Gültigkeitssignals. $x_{17}$ wird '0', wenn während der Busumlauf-Zeit eine Kollision oder in JAM-Signal erkannt werden, oder spätestens nach der Busumlauf-Zeit. Die Verzögerung des Schieberegisters $R_3$ in Figur 3 entspricht der Busumlauf-Zeit.

Durch das ODER-Gatter OD am K-Eingang des JK-Flipflops F/F in Figur 3 wird verhindert, daß während der Bus-Umlaufzeit mehr als ein Kollisionssignal erzeugt wird.

Die neue Kollisions-Erkennungsschaltung ist einfach, völlig unkritisch, zuverlässig usw. und verlangt keine Synchronisation der Bits und praktisch keine Anforderungen an die Leistungsschwankungen.

Da das erste Bit des Datenpakets immer eine '1' ist, braucht jeder Teilnehmer nur für die Zeit eines Umlaufs den Bus auf einlaufende Bits abzuhören, ohne daß man an Effizienz bei der Kollisions-Detektierung einbüßt. Ein Teilnehmer soll auch nur höchstens für die Zeit eines Umlaufs abhören, weil er danach seine eigenen Daten zurückempfängt.

Bei dem Verfahren nach dem Abhörprinzip (Anspruch 1) horcht jeder sendende Teilnehmer in den Bus hinein, und zwar vom Zeitpunkt des Startes seiner Daten an, der mit dem Beginn des Valid-Signals zusammenfällt. Aus praktischen und logischen Gründen wird aber die Abhörzeit immer kleiner ausfallen als die zugehörige Bus-Umlaufzeit. Dies bedeutet, daß man eine Totzeit hat, in der nicht abgehört wird und daher auch keine Kollisionen erkannt werden können. Für gewisse Anwendungsfälle kann die Wahrscheinlichkeit für die Nichterkennung der Kollision während der Totzeit zu hoch werden.

Um auch während der Totzeit Kollisionen erkennen zu können, wird vorteilhafterweise so vorgegangen, daß während dieser Totzeit Kollisionen zusätzlich mit einem anderen Verfahren zur Erkennung von Kollisionen festgestellt werden.

Besonders geeignet ist dafür das Verfahren nach dem Prinzip "Kollisionsserkennung nach Prinzip der Pegelbewertung mit JAM-Signal-Erzeugung (Anspruch 3), weil dieses Verfahren praktisch keine Anforderungen an die Pegeldynamik oder die Leistungsschwankungen am Ort eines Empfängers stellt.

Um dabei in der Totzeit mit Sicherheit eine Kollision feststellen zu können, wählt man die Totzeit entweder kürzer als die Dauer eines Bits oder man wählt sie gleich einem Bit und läßt die Datenpakete, speziell die Kopf-Bits der Datenpakete, mit zwei Bits des Binärzustandes '1' beginnen.

Dadurch wird gewährleistet, daß bei Überlagerung zweier Bitströme stets eine ausreichende Pegelüberschreitung auftritt, auf die ein Komparator ansprechen kann, der eine Kollision anzeigt. Dies bedeutet aber auch, daß die Totzeit gegenüber der Länge eines Bits nicht zu kurz gemacht werden darf. Sie muß so lang sein, daß der genannte Schwellwert-Komparator ansprechen kann.

In Stern-Netzen, in denen im allgemeinen die Entfernungen verschiedener Teilnehmer zum Koppler unterschiedlich sind, sind auch die Abhörzeiten der Teilnehmer verschieden. Auf jeden Fall wird immer wenigstens ein Teilnehmer eine Kollision detektieren und das entsprechende JAM-Signal erzeugen, wenn die Abfragezeit genau der Bus-Umlaufzeit entspricht. Es besteht hier nicht mehr die Notwendigkeit zwischen Übertragungsfehlern und Kollisionen zu unterscheiden.

In einem Ringbus werden auch alle Kollisionen erkannt, wenn man die Abhörzeit zwischen halber und voller Umlaufzeit wählt.

Die in den Figuren 2, 3 und 4 dargestellten Schaltungen können mit Bausteinen der Fa. Texas Instruments, wie sie beispielsweise aus "The TTL Data Book", Texas Instrum., fourth European Edition 1980, entnehmbar sind, aufgebaut werden. Die in den genannten Figuren angegebenen Bezeichnungen LS 221, LS 123, S 112, LS 164, LS 21, LS 08, S 08, S 32, LS 04, S 04, LS 00, LS 02, LS 3 bedeuten die Bezeichnungen der Bausteine in dem genannten Datenbuch.

## Patentansprüche

1. Verfahren zur Erkennung von Datenkollisionen in einem asynchron arbeitenden optischen Datenbus, an den mehrere Teilnehmer mit Sendern und Empfängern angeschlossen sind,

   dadurch gekennzeichnet,

   daß jeder sendende Teilnehmer, beginnend mit dem Beginn seiner Aussendung während einer Zeit, die im wesentlichen seiner Bus-Umlaufzeit entspricht, abfragt, ob in seinem Empfänger Datensignale aus dem Bus einlaufen und, wenn dies der Fall ist, ein Kollisionssignal erzeugt.

2. Verfahren nach Anspruch 1, dadurch gekennzeichnet, daß die Zeit, während welcher der sendende Teilnehmer abfragt, ob in seinem Empfänger Datensignale aus dem Bus einlaufen, kleiner als die Bus-Umlaufzeit gewählt ist, und daß während der Dauer zwischen dem Ablauf dieser Zeit und dem Ablauf der Bus-Umlaufzeit, in der nicht abgefragt wird, Kollisionen zusätzlich mit einem anderen Kollisions-Erkennungsverfahren festgestellt werden.

3. Verfahren nach Anspruch 2, dadurch gekennzeichnet, daß während der Dauer zwischen dem Ablauf der genannten Zeit und dem Ablauf der Bus-Umlaufzeit ein oder mehrere sendende Teilnehmer Kollisionen feststellen und diese allen übrigen Teilnehmern durch JAM-Signale mitteilen, deren Bitmuster unter den Datensignalen nicht vorkommt.

4. Verfahren nach Anspruch 2 oder 3, insbesondere nach Anspruch 3, dadurch gekennzeichnet, daß während der Dauer zwischen dem Ablauf der genannten Zeit und dem Ablauf der Bus-Umlaufzeit Kollisionen direkt von allen Teilnehmern über zwei Analog-Komparatoren festgestellt werden.

5. Verfahren nach Anspruch 4, dadurch gekennzeichnet, daß die Dauer zwischen dem Ablauf der genannten Zeit und dem Ablauf der Bus-Umlaufzeit kleiner gewählt wird als die Dauer eines oder mehrerer unmittelbar aufeinanderfolgender, den Anfang eines Datenpaketes bildender Bits in einem Binärzustand ('1'), dessen Pegel eines Schwellwertes der als Schwellwert-Komparatoren ausgebildeten Analog-Komparatoren näher liegt als der Pegel des anderen Binärzustandes.

6. Verfahren nach einem der vorhergehenden Ansprüche, dadurch gekennzeichnet, daß bei Feststellung einer Kollision durch einen sendenden Teilnehmer dieser ein Kollisionserkennungssignal erzeugt, welches ein Datensenden beendet und ein JAM-Signal auslöst.

7. Verfahren nach Anspruch 6, dadurch gekennzeichnet, daß zur Erkennung eines JAM-Signals durch einen Teilnehmer die von diesem empfangenen Signale auf eine Eigenschaft hin überprüft werden, die nur das JAM-Signal aufweist, nicht aber die Datensignale oder andere Signale, und daß beim Erkennen eines JAM-Signals ein JAM-Erkennungssignal erzeugt wird, welches ein Datensenden beendet.

8. Verfahren nach Anspruch 6 oder 7, dadurch gekennzeichnet, daß die Datensignale und die ein oder mehreren JAM-Signale in Form von Bitfolgen erzeugt werden, wobei die Datensignale verwürfelt werden, derart, daß eine ununterbrochene Reihenfolge von Bits eines Binärzustandes höchstens eine vorgebbare maximale Dauer erreichen kann, und wobei ein JAM-Signal aus einer die maximale Dauer überschreitenden ununterbrochenen Reihenfolge von Bits in einem Binärzustand besteht.

9. Verfahren nach einem der vorhergehenden Ansprüche, dadurch gekennzeichnet, daß der Beginn und das Ende eines Datensendens durch ein Gültigkeitssignal bestimmt wird, dessen Dauer etwa der Dauer des Datensendens entspricht.

10. Verfahren nach einem der vorhergehenden Ansprüche, insbesondere nach Anspruch 8 oder 9, dadurch gekennzeichnet, daß die Daten in Form von Datenpaketen auf den Bus übertragen werden, wobei jedes von einem Sender eines Teilnehmers abgesandte Datenpaket sich aus Kopfbits oder Kopf- und Dummy-Bits, Nutzdaten und Ende-Markierungsbits zusammensetzt, wobei die Kopfbits oder Kopf- und Dummy-Bits den Nutzdaten vorausgehen und die Ende-Markierungsbits das Ende der Nutzdaten markieren.

11. Verfahren nach Anspruch 9 und 10, dadurch gekennzeichnet, daß der Anfang der Kopfbits oder Kopf- und Dummy-Bits und das Ende der Nutzdaten eines Datenpaketes durch die Vorder- bzw. Rückflanke des Gültigkeitssignals bestimmt werden.

12. Schalteinrichtung zur Durchführung eines Verfahrens nach Anspruch 8 und 9, gekennzeichnet durch eine bistabile Kippschaltung (FF), eine Signalverzögerungs-Einrichtung (R3) und ein von der bistabilen Kippschaltung (FF) gesteuertes Tor (U3), wobei die bistabile Kippschaltung (FF) mit Erscheinen der Vorderflanke eines Gültigkeitssignals oder eines entsprechenden Vorderflankensignals in einen Zustand setzbar ist, der das Tor (U3) für ein zugeführtes Freileitungssignal öffnet, wobei die bistabile Kippschaltung (FF) durch das in der Signalverzögerungseinrichtung (R2) um die Bus-Umlaufzeit verzögerte Vorderflankensignal in einen Zustand setzbar ist, der das Tor (U3) wieder schließt, wobei dem Ausgang des Tors (U3) das Kollisionserkennungssignal zu entnehmen ist.

13. Schalteinrichtung nach Anspruch 12, dadurch gekennzeichnet, daß die Signalverzögerungseinrichtung (R3) aus einem Schieberegister besteht.

14. Schalteinrichtung nach Anspruch 12 oder 13 zur Durchführung eines Verfahrens nach Anspruch 4 oder 5 und 9, dadurch gekennzeichnet, daß den beiden als Schwellwert-Komparatoren ausgebildeten Analog-Komparatoren die von einem Empfänger aus dem Bus empfangenen Signale zuführbar sind, und daß deren Schwellwerte relativ zueinander so gewählt sind, daß beim Empfang von Daten aus nur einem und nicht mehreren Sendern nur einer der beiden Schwellwert-Komparatoren und nicht auch der andere anspricht, während bei einer Überlagerung von Daten beide Komparatoren ansprechen.

15. Schalteinrichtung nach Anspruch 13 oder 14 zur Durchführung eines Verfahrens nach Anspruch 8 und 9, gekennzeichnet durch einen monostabilen Multivibrator (M.M.4), der durch das Kollisionserkennungssignal in den instabilen Zustand setzbar ist und dessen Zeitkonstante ($\tau_4$) gleich der Dauer des zu erzeugenden JAM-Signals gewählt ist, und durch ein Tor ($T_1$) mit zwei Eingängen, von denen einer mit einem dem JAM-Signal entsprechenden Ausgangssignal ($\bar{Q}$) des monostabilen Multivibrators (M.M.4) und der andere mit den verwürfelten Datensignalen eines sendenden Teilnehmers zu beaufschlagen ist, wobei das Tor ($T_1$) so ausgebildet ist, daß es das Ausgangssignal ($\bar{Q}$) des monostabilen Multivibrators zu dem Sender (LED) des Teilnehmers nur dann durchläßt, wenn das Gültigkeitssignal am Tor ($T_1$) anliegt.

16. Schalteinrichtung nach Anspruch 13 zur Durchführung eines Verfahrens nach Anspruch 7 und 8, gekennzeichnet durch einen von den Ausgangssignalen des Empfängers eines Teilnehmers getriggerten monostabilen Multivibrator (R.M.M.5), dessen Zeitkonstante ($\tau_5$) größer als die längstmögliche ununterbrochene Folge von Bits in einem Binärzustand in den verwürfelten Datensignalen aber kleiner als die Dauer des JAM-Signals gewählt ist, durch eine parallel zu dem retriggerbaren monostabilen Multivibrator (R.M.M.5) geschalteten Empfänger um eine Zeit verzögert, die der Signallaufzeit durch den retriggerbaren Multivibrator (R.M.M.5) entspricht, und durch ein UND-Tor ($U_2$) mit zwei Eingängen, von denen einer mit einem Ausgangssignal ($\bar{Q}$) aus dem Multivibrator (R.M.M.5) und der andere mit den verzögerten Signalen zu beaufschlagen ist.

17. Schalteinrichtung nach Anspruch 14, gekennzeichnet durch eine Einrichtung (OD), die verhindert, daß während der Bus-Umlaufzeit mehr als ein Kollisionserkennungssignal erzeugt wird.


**Claims**

1. A method of recognising data collisions in an asynchronoualy operating optical data bus to which are connected a plurality of subscribers with transmitters and receivers, characterised in that each transmitting subscriber, commencing at the start of its transmission, during a period of time which basically corresponds to its bus cycle time, enquires whether data signals are incoming in its receiver from the bus and, if this is so, produces a collision signal.

2. A method as claimed in claim 1, characterised in that the time during which the transmitting subscriber enquires whether data signals are incoming in its receiver from the bus is selected to be shorter than the bus cycle time and that during the period of time which occurs between the end of this time and the end of the bus cycle time and in which no enquiries are made, collisions are additionally determined using another collision recognition procedure.

3. A method as claimed in claim 2, characterised in that during the interval of time between the end of the aforesaid time and the end of the bus cycle time, one or more than one transmitting subscriber(s) establish(es) collisions and communicate these to all the other subscribers by means of JAM-signals whose bit patterns do not occur amongst the data signals.

4. A method as claimed in claim 2 or 3, in particular as claimed in claim 3, characterised in that during the interval of time between the end of the aforesaid time and the end of the bus collision time collisions are directly established by all the subscribers via two analogue comparators.

5. A method as claimed in claim 4, characterised in that the interval of time between the end of the aforesaid time and the end of the bus cycle time is selected to be shorter than the duration of one or more than one directly consecutive bit(s) which form(s) the start of a data packet, in a binary state ('1') whose level is closer to a threshold value of the analogue comparators, which are in the form of threshold value comparators, then the level of the other binary state.

6. A method as claimed in one of the preceding claims, characterised in that when a collision is established by a transmitting subscriber, this subscriber generates a collision recognition signal which terminates the data transmission and triggers a JAM-signal.

7. A method as claimed in claim 6, characterised in that in order that a JAM-signal may be recognised by a subscriber, the signals received by said subscriber are checked for a characteristic possessed only by the JAM-signal, but not by the data signals or other signals, and that when a JAM-signal is recognised a JAM-recognition signal is generated which terminates the data tranmission.

8. A method as claimed in claim 6 or 7, haracterised in that the data signals and the one or more than one JAM-signal(s) are generatad in the form of bit sequences, where the data signals are scrambled in such manner that an uninterrupted sequence of bits of one binary state can reach a maximum predeterminable duration and where a JAM-signal comprises an uninterrupted sequence of bits in one binary state which exceed the maximum duration.

9. A method as claimed in one of the preceding claims, characterised in that the start and end of a data transmission is governed by a validity signal whose duration corresponds approximately to the duration of the data tremsmission.

10. A method as claimed in one of the preceding claims, in particular as claimed in claim 8 or 9, characterised in that the items of data are transmitted on the bus in the form of data packets where each data packet, transmitted by a subscriber transmitter is composed of header bits or header- and dummy bits, useful data end end-marker bits, where the header bits or header- end dummy bits precede the useful data and where the end-marker bits mark the end of the useful data.

11. A method as claimed in claim 9 and 10. <u>characterised in</u> that the start of the header bits or the header- end dummy bits and end of the useful data of a data packet are defined by the front and rear flank respectively of the validity signal.

12. A switching device for carrying out a method as claimed in claim 8 and 9, <u>characterised by</u> a bistable flip-flop (FF), a signal delay device ($R_3$), and a gate ($U_3$) which is controlled by the bistable flip-flop (FF), where, on the appearance of the front flank of a validity signal or a corresponding front flank signal the bistable flip-flop (FF) can be set in a state which opens the gate ($U_3$) for a supplied free-line signal, where the bistable flip-flop (FF) can be brought by the front flank signal, which is delayed in the signal delay device ($R_2$) by the bus cycle time, into a state which closes the gate ($U_3$) again, where the collision recognition signal can be obtained from the output of the gate ($U_3$).

13. A switching device as claimed in claim 12, <u>characterised in</u> that the signal delay device ($R_3$) comprises a shift register.

14. A switching device as claimed in claim 12 or 13 for carrying out a method as claimed in claim 4 or 5 and 9, <u>characterised in</u> that the two analogue-comparators, which are in the form of threshold value comparators, can be supplied with the signals received by a receiver from the bus, and that their threshold values relative to one enother are selected to be such that when data is received from only one transmitter and not a plurality of transmitters, only one of the two threshold value comparators, and not the other, responds, whereas in the case of the superimposition of data both comparators respond.

15. A switching device es claimed in claim 13 or 14 for carrying out a method es claimed in claim 8 and 9, <u>characterised by</u> a monostable multivibrator (M.M.4) which can be set by the collision recognition signal into the unstable state and whose time constant ($\tau_4$) is selected to be equal to the duration of the JAM-signal which is to be generated, and further characterised by a gate ($T_1$) having two inputs, one of which is supplied with an output signal ($\bar{Q}$) - corresponding to the JAM-signal - of the monostable multivibrator (M.M.4), and the other of which is supplied with the scrambled data signals of a transmitting subscriber, where the gate ($T_1$) is designed to be such that it transmits the output signal ($\bar{Q}$) of the monstable multivibrator to the transmitter (LED) of the subscriber only when the validity signal is present at the gate ($T_1$).

16. A switching device as claimed in claim 13 for carrying out a method as claimed in claim 7 and 8, <u>characterised by</u> a monostable multivibrator (R.M.M.5) which is triggered by the output signals of the receiver of a subscriber and

whose time constant ($\tau_5$) is selected to be greater than the longest possible uninterrupted sequence of bits in one binary state in the scrambled data signals but to be shorter than the duration of the JAM-signal, further characterised by a receiver which is connected in parallel to the retriggerable monostable multivibrator (R.M.M.5) with a delay time which corresponds to the signal transit time through the retriggerable multivibrator (R.M.M.5) and by an AND-gate ($U_2$) with two inputs, one of which is supplied with an output signal ($\bar{Q}$) from the multivibrator (R.M.M.5) and the other of which is supplied with the delay signals.

17. A switching device as claimed in claim 14, <u>characterised by</u> a device (OD) which prevents more than one collision recognition signal from being generated during the bus cycle time.


**Revendications**

1. Procédé pour détecter des collisions de données dans un bus optique de transmission de données fonctionnant de façon asynchrone et auquel sont raccordées plusieurs abonnés comportant des récepteurs et des émetteurs, caractérisé par le fait que chaque abonne émettant effectue, en commençant dès le début de son émission et pendant un intervalle de temps qui correspond essentiellement à une durée de circulation dans le bus, une interrogation pour savoir si des signaux de données ont pénétré dans son récepteur en provenance du bus, et, lorsque c'est le cas, produit un signal de collision.

2. Procédé suivant la revendication 1, caractérisé par le fait que l'intervalle de temps, pendant lequel l'abonné appelant demande si des signaux de données ont pénétré dans son récepteur en provenance du bus, est choisi inférieur à la durée de circulation dans le bus, et que pendant la durée s'étendant entre le déroulement de cet intervalle de temps et le déroulement de la durée de circulation dans le bus et pendant laquelle aucune interrogation ne s'effectue, des collisions sont détectées de façon supplémentaire au moyen d'un autre procédé de détection de collisions.

3. Procédé suivant la revendication 2, caractérisé par le fait que pendant la durée s'étendant entre le déroulement dudit intervalle de temps et le déroulement de la durée de circulation dans le bus, un ou plusieurs abonnés qui émettent, détectent des collisions et informent de ces collisions tous les autres abonnés au moyen de signaux JAM, dont le profil binaire n'apparaît pas parmi les signaux de données.

4. Procédé suivant la revendication 2 ou 3, notamment suivant la revendication 4, caractérisé par le fait que des collisions sont détectées directement par tous les abonnés par l'intermédiaire de deux comparateurs analogiques, pendant la durée s'étendant entre le déroulement dudit intervalle de temps et le déroulement de la durée de circulation dans le bus.

5. Procéde suivant la revendication 4, caractérisé par le fait qu'on choisit la durée s'étendant entre le déroulement dudit intervalle de temps et le déroulement de la durée de circulation du bus, inférieure à la durée d'un ou de plusieurs bits se succédant directement, formant le début d'un paquet de données et possédant l'état binaire ('1'), dont le niveau est plus proche d'une valeur de seuil des comparateurs analogiques réalisés sous la forme de comparateurs à valeur de seuil, que ne l'est le niveau de l'autre état binaire.

6. Procédé suivant l'une des revendications précédentes, caractérisé par le fait que, lors de la détection d'une collision par un abonné appelant, ce dernier produit un signal d'identification de collision, qui arête une émission de données et déclenche un signal JAM.

7. Procédé suivant la revendication 6, caractérisé par le fait que pour l'identification d'un signal JAM par un abonné, les signaux reçus par cet abonné sont contrôlés pour savoir s'ils présentent une caractéristique que présente seul le signal JAM, mais pas les signaux donnés ou d'autres signaux, et que, lors de la détection d'un signal JAM, un signal d'identification de signal JAM, qui arête une émission de données, est produit.

8. Procédé suivant la revendication 6 ou 7, caractérisé par le fait que les signaux de données et le ou la pluralité des signaux JAM sont produits sous la forme de suites binaires, les signaux de données étant codés de telle sorte qu'une suite ininterrompue de bits présentant un état binaire peut atteindre au maximum une durée maximale pouvant être prédéterminée, et un signal JAM étant constitué par une suite ininterrompue, dépassant la durée maximale, de bits possédant un état binaire.

9. Procédé suivant l'une des revendications précédentes, caractérisé par le fait que le début et la fin d'une émission donnée sont déterminés par un signal de validité, dont la durée correspond approximativement à la durée de l'émission des données.

10. Procédé suivant l'une des revendications précédentes, notamment suivant la revendication 8 ou 9, caractérisé par le fait que les données sont transmises sous la forme de paquets de données au bus, auquel cas chaque paquet de données, qui est émis par un émetteur d'un abonné, se compose de bits d'en-tête ou de bits d'en-tête et de bits fictifs, de données utiles et de bits de marquage de fin, les bits d'en-tête ou les bits d'en-tête et les bits fictifs précédant les données utiles et, que les bits de marquage de fin indiquent la fin des données utiles.

11. Procédé suivant les revendications 9 et 10, caractérisé par le fait que le début des bits d'en-tête ou des bits d'en-tête et des bits fictifs et la fin des données utiles d'un paquet de données sont déterminés par le flanc avant ou le flanc arrière du signal de validité.

12. Dispositif pour la mise en oeuvre d'un procédé suivant les revendications 8 ou 9, caractérisé par un circuit à bascule bistable (FF), un dispositif (R$_3$) de retardement des signaux et une porte (U$_3$) commandée par le circuit à bascule bistable (FF), et dans lequel le circuit à bascule bistable (FF) peut être positionné lors de l'apparition du flanc avant d'un signal de validité ou d'un signal correspondant de flanc avant, dans un état qui rend la porte (U$_3$) passante pour un signal de libération envoyé, et dans lequel le circuit à bascule bistable (FF) peut être placé par le signal de flanc avant retardé de la durée de circulation dans le bus, dans le dispositif (R$_2$) de retardement des signaux, dans un état qui ferme à nouveau la porte (U$_3$), et dans lequel le signal d'identification de collision peut être prélevé sur la sortie de la porte (U$_3$).

13. Dispositif suivant la revendication 12, caractérisé par le fait que le dispositif (R$_3$) de retardement des signaux est constitué par un registre à décalage.

14. Dispositif suivant la revendication 12 ou 13 pour la mise en oeuvre d'un procédé suivant les revendications 4 ou 5 et 9, caractérisé par le fait que les signaux reçus par un récepteur en provenance du bus sont envoyés aux deux comparateurs analogiques réalisés sous la forme de comparateurs à valeur de seuil et que leurs valeurs de seuil sont choisies les unes par rapport aux autres de telle sorte que, lors de la réception de données à partir uniquement d'un émetteur et non de plusieurs émetteurs, seul l'un des deux comparateurs à valeur de seuil et non l'autre répond, tandis que dans le cas d'une superposition de données, les deux comparateurs répondent.

15. Dispositif suuivant la revendication 13 ou 14, pour la mise en oeuvre d'un procédé suivant les revendications 8 et 9, caractérisé par un multivibrateur monostable (M.M.4), qui peut être placé par le signal d'identification de collisions dans l'état stable et dont la constante de temps (τ$_4$) est choisie égale à la durée du signal JAM devant être produit, et par une porte (T$_1$) comportant deux entrées, dont l'une doit être chargée par un signal de sortie (Q̄), qui correspond au signal JAM, du multivibrateur monostable (M.M.4) et dont l'autre doit être chargée par les signaux de données brouillés d'un abonné appelant, la porte (T$_1$) étant agencée de telle sorte qu'elle transmet le signal de sortie (Q̄) du multivibrateur monostable à l'émetteur (LED) de l'abonné uniquement lorsque le signal de validité est présent sur la porte (T$_1$).

16. Dispositif suivant la revendication 13 pour la mise en oeuvre d'un procédé suivant les revendications 7 et 8, caractérisé par un multivibrateur monostable (R.A.M 5), qui est déclenché par les signaux de sortie du récepteur d'un abonné et dont la constante de temps (τ$_5$) est choisie supérieure à la suite ininterrompue la plus longue possible de bits présentant un état binaire dans les signaux de données codés, mais inférieure à la durée du signal JAM, par un récepteur branché en parallèle avec le multivibrateur monostable redéclenchable (R.A.M.5) et réalisant une réception avec un retard qui correspond au temps de transit des signaux à travers le multivibrateur redéclenchable (R.A.M.5), et par une porte ET (U$_2$) comportant deux entrées, dont l'une doit être chargée par un signal de sortie ($\bar{Q}$) arrivant du multivibrateur (R.M.M.5) et dont l'autre doit être chargée par les signaux retardés.

17. Dispositif suivant la revendication 14, caractérisé par un dispositif (OD), qui empêche que pendant la durée de circulation dans le bus, plus d'un signal d'identification de collision soit produit.

**FIG 1**

FIG 2

FIG 3

# FIG 4

Vom
Schwellw
Komparat.
des Empf.

Takt von
PLL

De-Scrambler

LS164

'0' C1 R2 '1'

A B

'0' C1 R2 '1'

A R01
4 Bit
Binär Zähl.
LS93
B R02

QA
QB
QC
QD

S04

LS21

A B

SN75451A

e8

'0'
C1
'1'
R6

Daten

Rechner

'0'
C1
'1'
R6

Valid

e26

SN75451A

'0' C1 R2 '1'

LS164

2 3

12

S04

LS21

LS21 LS21 LS21

LS21

S32

'0' C1 R2 '1'

J Q
CK
K Q̄

X17

'1'

C1=22µF ‖0,1µF
Tant ‖Cer
6,3V ‖50V

R2=4,7kΩ
R6=20Ω(1W)

Signal bei Erkenn.
von Kollis od.JAM
um Valid-Signal
abzuschalten

UZ

Z

S08

0111 332